# EUROPEAN PATENT SPECIFICATION

(11) **EP 3 040 295 B1**
(45) Date of publication and mention of the grant of the patent: **13.06.2018**
(21) Application number: 15199998.4
(22) Date of filing: 15.12.2015
(51) Int. Cl.: B65G 17/08

(54) **MODULAR CONVEYOR BELT**
MODULARES TRANSPORTBAND
BANDE TRANSPORTEUSE MODULAIRE

(30) Priority: 16.12.2014 IT AN20140197
(43) Date of publication of application: 06.07.2016
(73) Proprietor: Movex S.p.A., 24060 Telgate (BG) (IT)
(72) Inventor: MARSETTI, Matteo, 24064 Grumello del Monte (BG) (IT)
(74) Representative: Ottazzo, Marco Francesco Agostino

(56) References cited:
- EP-A1- 0 795 496
- WO-A1-2011/051411
- WO-A2-2014/060841
- US-A- 6 029 802
- US-A1- 2006 201 791

## Description

The invention relates to a modular conveyor belt according to the preamble of claim 1. Particularly, there is disclosed herein a so-called micro-pitch modular conveyor belt.

As used herein, the term micro-pitch is used to define a modular belt having a nominal pitch of 8 mm.

Bulk items are known to be conveyed using modular belts which slide on guides extending substantially and/or generally on a horizontal plane.

Such belts comprise an aligned succession of modular elements, joined together by revolute joints which form a support surface for the items to be conveyed.

These modules may also be in side-by-side relationship, to obtain a belt of desired length.

Projections (hinge rings) are provided at the opposite sides of each pair of jointed modules, and extend parallel to the direction of movement of the belt in intermeshing relationship.

The hinge rings of each pair of modules are held together by a pivot pin which extends through a series of holes formed in such projection, and extending transverse to the direction of movement of the belt.

For proper operation of the belt, the pivot pins that join the modules together shall remain within the holes and be prevented from slipping off.

For this purpose, a number of arrangements are known for axially locking the connecting pins and prevent accidental release thereof.

One example of a modular conveyor according to the preamble of claim 1 is disclosed by EP 0795496 in which adjacent modules are hinged together through a prior pin.

Prior art document WO 2014/060841 discloses a modular conveyor belt comprising a plurality of modules hinged together by means of intermeshing hinge rings with a hinge pin inserted therein.

In the disclosure of WO 2014/060841 , the pivot pin has a flange at one end, which is introduced into a seat, in the first hinge ring of one of the two modules and locked therein by rotating the pin (with the help of a screw-driver).

The object of this invention is to obviate at least some of prior art problems and particularly the one as set forth hereinbefore.

Particularly, one object of the invention is to provide a cost-effective, and easy- and quick-to use system for mounting and removing the pivot pins of the modular conveyor belt.

More particularly, the need is felt for an arrangement that can meet the strict safety requirements of the modular conveyor belts installed in food-processing factories.

This object is fulfilled by a modular conveyor belt as defined in claim 1.

Further advantages may be obtained by the additional features of the dependent claims.

Possible embodiments of the modular conveyor belt will be now described with reference to the accompanying drawings in which:

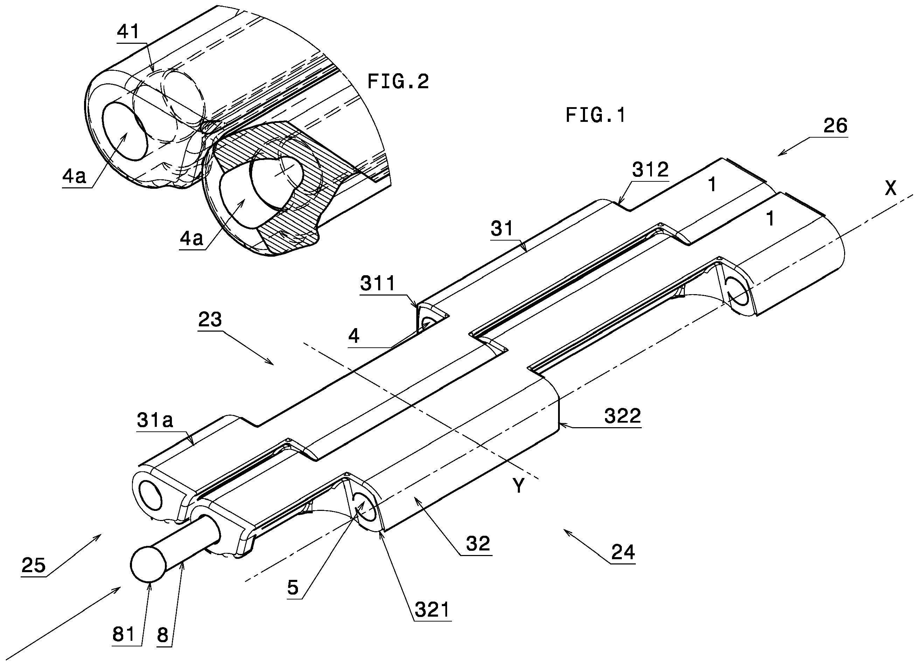

Figure 1 is a perspective view of two chain modules as they are being coupled together;
Figure 2 is a partially sectional perspective view of a detail of the meshes of Figure 1;

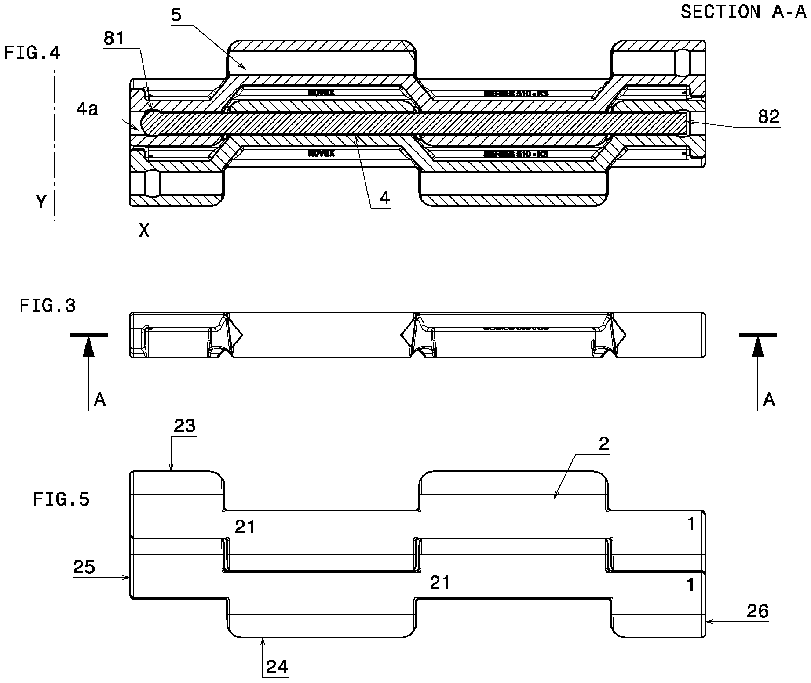

Figure 3 is a front view of the modules of Figure 1 ;
Figure 4 is a sectional view of the pair of modules of Figure 3 , and
Figure 5 is a top view of the modules of Figures 3 and 4 .

Referring to the accompanying drawings, a modular conveyor belt is described, which is used for conveying various items, e.g. food items, in a conveying direction Y.

The conveyor belt is adapted to be driven by at least one gear wheel (not shown).

This conveyor belt comprises a plurality of modules 1, 1, ...1 arranged in succession and jointed together.

Each module 1 comprises an intermediate section 2 which extends along an axis X (transverse to the direction Y of movement of the belt).

The intermediate section 2 has: a top surface 21 for supporting items to be conveyed, a front side 23, a rear side 24, a first lateral side 25 and a second lateral side 26.

A first plurality of projections or connection ends or hinge rings 31a, 31 are provided on the front side 23 of the intermediate section 2 and extend in the conveying direction Y.

In the illustrated embodiment, the hinge rings 31 a, 31 define conveying surfaces substantially coplanar with the conveying surface of the intermediate section 2 of the module 1.

The hinge rings 31a, 31 of such first plurality have a pair of side walls 311, 312 which define their transverse dimension and have holes 4a, 4 aligned along a single axis, parallel to the transverse axis X, for receiving a first connecting pin 8.

The connecting pin 8, which will be better described below, has a first end, or head, 81 and a second end, or tail, 82.

A second plurality of projections or connection ends or hinge rings 32 are provided on the rear side 24 of the intermediate section 2 of the module 1 and extend in the longitudinal direction Y (but opposite to the first plurality of projections or connection ends or hinge rings 31a, 31).

In the illustrated embodiment, the second plurality of projections or connection ends or hinge rings 32 also define conveying surfaces substantially coplanar with the conveying surface of the intermediate section 2 of the module 1.

The hinge rings 32, 32 of such second plurality have a pair of side walls 321, 322 which define their transverse dimension and have holes 5 aligned along a single axis, parallel to the transverse axis X, for receiving a second connecting pin 8.

The first and second hinge rings 31, 31 a, 32 have mating profiles, such that the first hinge ring 31 a, 31 of the module 1 may be in intermeshing relationship with the second hinge rings 32 of a similar adjacent module, and that the second hinge rings 32 of the module may be in intermeshing relationship with the first hinge rings (31a, 31) of a second similar adjacent module.

In the illustrated embodiment, the holes 4, 4a, 5 of the hinge rings 31, 31a, 32 have a substantially and/or generally round section and the connecting pins 8 have a substantially and/or generally cylindrical shape (excepting the end 81 as more clearly explained below).

The hole 4a of at least one lateral hinge ring 31a of at least one of the two pluralities of hinge rings 31, 31a; 32 has an inner portion, or seat 41, whose cross section is wider than the rest of the hole 4a, an the connecting pin 8 has a first end, or head, 81 having an enlarged section as compared to the rest of the pin 8 to allow snap-fit insertion of the end 81 of the pin 8 into the portion 41 having a wider section.

The head 8 and the seat 41 have such shapes that the snap-fit insertion of the head 81 into the seat 41 is obtained by axially pushing the pin 8, with no need for rotary movements. The head 81 has the shape of a sphere or a spherical cap, with a maximum transverse dimension greater than the transverse dimension of the rest of the pin 8.

Excepting the head 81, which has the shape of a sphere or a spherical cap, the rest of the pin 8 has a constant section, and particularly has a cylindrical shape.

The seat 41 has a shape that mates the shape of the head 81.

In order to assemble two adjacent modules 1, 1, the second end 82 of the pin 8, i.e. the end opposite to that with the enlarged section 81, is introduced into the hole 4a, at the lateral hinge ring 31a.

The pin 8 is slid into the holes 4, 5 of the interconnected modules on the same line, until the head 81 enters the hole 4a of the lateral hinge ring 31a.

A slight pressure will force the head 81 to pass through the hole 4a and reach the seat 41 where it stops.

The pin 8 is removed by simply exerting a pressure with a tip on the second end, or tail, 82 of the pin 8, to thereby force the head 81 out of the seat 41.

Therefore, the above described arrangement provides the advantage that the pin 8 is locked in a safe but reversible manner.

The module 1 is obtained by molding of thermoplastic materials, e.g. an acetal resin, whereas the pin 8 is made from a thermoplastic material, such as an acetal resin or polypropylene.

In a possible embodiment, the holes 4, 4a, 5 have an inlet diameter of 3 mm with a tolerance of ± 0.1 mm.

Here, the pin 8 may have a diameter of 2.9 mm, with a tolerance of ± 0.1 mm and the head 81 has a maximum diameter of 3.3 mm, with a tolerance of ± 0.1 mm and the seat 41 has a maximum transverse dimension of 3.3 mm, with a tolerance of ± 0,1 mm.

## Claims

1. A modular conveyor belt adapted to be driven by at least one gear wheel, wherein said conveyor belt is adapted to move in a conveying direction (Y), said belt comprising a plurality of successive, mutually hinged modules (1, 1, ...1), each module (1) comprising in turn:
a) an intermediate section (2) extending along an axis (X) transverse to said conveying direction (Y), having a top surface for supporting objects to be conveyed (21), a front side (23), a rear side (24), a first lateral side (25) and a second lateral side (26);
b) a first plurality of hinge rings (31a, 31);
b1) extending from said front side (23) along said conveying direction (Y);
b2) having a pair of lateral walls (311,312) which define the transverse dimension thereof;
b3) having holes (4a, 4) aligned along a single axis parallel to said transverse axis (X) for receiving a first connecting pin (8);
c) a second plurality of hinge rings (32)
c1) extending from said rear side (24) along said conveying direction (Y);
c2) having a pair of lateral walls (321, 322) which define the transverse dimension thereof;
c3) having holes (5) extending along a single axis parallel to said transverse axis (X) for receiving a second connecting pin (8);
d) said first and second hinge rings (31 a, 31, 32) having mating profiles, such that the first hinge ring (31a, 31) of said module may be in intermeshing relationship with the second hinge rings (32) of a similar adjacent module, and that the second hinge rings (32) of said module may be in intermeshing relationship with the first hinge rings (31a, 31) of a second similar adjacent module;
e) the hole of at least one lateral hinge ring (31 a) of at least one of said two pluralities of hinge rings (31 a, 31, 32) has a hole (4a) with an inner portion (41) having an enlarged cross section defining a seat (41); said connecting pin (8) has an end comprising a head (81) with an enlarged cross section for snap-fit insertion of said head (81) into said seat (41) of said lateral hinge ring (31 a); said snap-fit insertion of said head (81) being obtained by a linear movement of said pin (8);
**characterized in that**
said head (81) of the pin (8) is a sphere or a spherical cap (81) whose maximum transverse dimension is greater than the transverse dimension of the rest of the pin (8) and wherein said seat (41) has a shape that mates the shape of said head (81) so that said pin (8) is locked in a safe but reversible manner.

2. A conveyor as claimed in claim 1, wherein:
said first plurality of hinge rings (31a, 31) defines conveying surfaces substantially coplanar with the conveying surface of said intermediate section (2), and wherein
said second plurality of hinge rings (32) defines conveying surfaces substantially coplanar with the conveying surface of said intermediate section (2).

## Patentansprüche

1. Modulares Transportband, das dazu geeignet ist, durch mindestens ein Zahnrad getrieben zu werden, worin das genannte Transportband derart ausgebildet ist, dass es sich in einer Förderrichtung (Y) bewegt, wobei das genannte Band eine Mehrzahl von aufeinanderfolgenden, gegenseitig angelenkten Modulen (1, 1, ...1) umfasst, wobei jedes Modul (1) wiederum umfasst:
a) einen sich entlang einer quer zu der genannten Förderrichtung (Y) verlaufenden Achse (X) erstreckenden Zwischenabschnitt (2), der eine Oberseite zur Unterstützung von zu fördernden Gegenständen (21), eine Stirnseite (23), eine Rückseite (24), eine erste seitliche Seite (25) sowie eine zweite seitliche Seite (26) hat;
b) eine erste Mehrzahl von Gelenkringen (31a, 31):
b1) die von der genannten Stirnseite (23) entlang der genannten Förderrichtung (Y) verlaufen;
b2) die ein Paar von die Querabmessungen davon bestimmenden Seitenwänden (311,312) haben;
b3) die entlang einer zu der genannten Querachse (X) parallel verlaufenden einzigen Achse ausgerichtete Bohrungen (4a, 4) zur Aufnahme eines ersten Verbindungsstift (8) haben;
c) eine zweite Mehrzahl von Gelenkringen (32):
c1) die von der genannten Rückseite (24) entlang der genannten Förderrichtung (Y) verlaufen;
c2) die ein Paar von die Querabmessungen davon bestimmenden Seitenwänden (321,322) haben;
c3) die sich entlang einer zu der genannten Querachse (X) parallel verlaufenden einzigen Achse erstreckende Bohrungen (5) zur Aufnahme eines ersten Verbindungsstifts (8) haben;
d) wobei die genannten ersten und die genannten zweiten Gelenkringe (31a, 31, 32) Verbindungsprofile haben, so dass die ersten Gelenkringe (31a, 31) des genannten Moduls in ineinandergreifender Beziehung mit den zweiten Gelenkringen (32) eines ähnlichen, angrenzenden Moduls stehen können, und dass die zweiten Gelenkringe (32) des genannten Moduls in ineinandergreifender Beziehung mit den ersten Gelenkringen (31a, 31) eines ähnlichen, angrenzenden Moduls stehen können;
e) die Bohrung mindestens eines seitlichen Gelenkrings (31a) mindestens einer der genannten beiden Mehrzahlen von Gelenkringen (31a, 31, 32) eine Bohrung (4a) hat, die eine innere Portion (41) mit einem einen Sitz (41) bestimmenden erweiterten Querschnitt hat; wobei der genannte Verbindungsstift (8) ein Ende hat, das einen Kopf (81) mit einem erweiterten Querschnitt umfasst, so dass der genannte Kopf (81) in den genannten Sitz (41) des genannten seitlichen Gelenkrings (31a) eingerastet werden kann; wobei das genannte Einrasten des genannten Kopfs (81) durch eine lineare Bewegung des genannten Stifts (8) erzielt werden kann;
**dadurch gekennzeichnet, dass**
der genannte Kopf (81) des Stifts (8) eine Kugel oder Kugelkalotte (81) ist und die höchste Querabmessung davon größer als die Querabmessung des restlichen Teils des Stifts (8) ist, worin der genannte Sitz (41) eine Form hat, die in die Form des genannten Kopfs (81) eingreift, so dass der genannte Stift (8) sicher aber reversibel gesperrt ist.

2. Band nach Anspruch 1, worin:
die genannte erste Mehrzahl von Gelenkringen (31a, 31) Förderflächen bestimmt, die zu der Förderfläche des genannten Zwischenabschnitts (2) wesentlich koplanar sind, und worin
die genannte zweite Mehrzahl von Gelenkringen (32) Förderflächen bestimmt, die zu der Förderfläche des genannten Zwischenabschnitts (2) wesentlich koplanar sind.

## Revendications

1. Bande transporteuse modulaire conçue pour être entraîné par au moins une roue dentée, où ladite bande transporteuse est adaptée pour se déplacer dans une direction de transport (Y), ladite bande comprenant une pluralité de modules successives articulés entre eux (1, 1, ...1), chaque module (1) comprenant à son tour:
a) une section intermédiaire (2) s'étendant le long d'un axe (X) transversal à ladite direction de transport (Y), ayant une surface supérieure pour soutenir les objets à transporter (21), un côté antérieur (23), un côté postérieur (24), un premier côté latéral (25) et un second côté latéral (26);
b) une première pluralité de bagues d'articulation (31a, 31) :
b1) s'étendant dudit côté antérieur (23) le long de ladite direction de transport (Y);
b2) ayant une paire de parois latérales (311,312) qui définissent sa dimension transversale;
b3) ayant des trous (4a, 4) alignés le long d'un axe individuel parallèle audit axe transversal (X) pour recevoir une première tige de connexion (8);
c) une seconde pluralité de bagues d'articulation (32) :
c1) s'étendant dudit côté postérieur (24) le long de ladite direction de transport (Y);
c2) ayant une paire de parois latérales (321,322) qui définissent sa dimension transversale;
c3) ayant des trous (5) s'étendant le long d'un axe individuel parallèle audit axe transversal (X) pour recevoir une seconde tige de connexion (8);
d) lesdites premières et lesdites secondes bagues d'articulation (31a, 31, 32) ayant des profiles d'accouplement, de sorte que les premières bagues d'articulation (31a, 31) dudit module peuvent être en relation d'enchevêtrement avec les secondes bagues d'articulation (32) d'une module similaire adjacent et que les secondes bagues d'articulation (32) dudit module peuvent être en relation d'enchevêtrement avec les premières bagues d'articulation (31a, 31) d'un second module similaire adjacent;
e) le trou d'au moins une bague d'articulation latérale (31a) d'au moins une desdites deux pluralité de bagues d'articulation (31a, 31, 32) a un trou (4a) avec une portion intérieure (41) ayant une section transversale élargies définissant un siège (41); ladite tige de connexion (8) a une extrémité comprenant une tête (81) avec une section transversale élargie pour l'introduction par encliquetage de ladite tête (81) dans ledit siège (41) de ladite bague d'articulation latérale (31a); ladite introduction par encliquetage de ladite tête (81) étant obtenue par un déplacement linéaire de ladite tige (8);
**caractérisée en ce que**
ladite tête (81) de la tige (8) est une sphère ou une calotte sphérique (81) dont la dimension transversale maximale est supérieure à la dimension transversale de la partie restante de la tige (8) et où ledit siège (41) a une forme qui s'accouple avec la forme de ladite tête (81), de sorte que ladite tige (8) est bloquée de façon sure mais réversible.

2. Bande selon la revendication 1, où:
ladite première pluralité de bagues d'articulation (31a, 31) définit des surfaces de transport substantiellement coplanaires à la surface de transport de ladite section intermédiaire (2), et où
ladite seconde pluralité de bagues d'articulation (32) définit des surfaces de transport substantiellement coplanaires à la surface de transport de ladite section intermédiaire (2).
